(19) Europäisches Patentamt / European Patent Office / Office européen des brevets

(11) **EP 4 815 437 A1**

(12) **EUROPEAN PATENT APPLICATION**
published in accordance with Art. 153(4) EPC


(43) Date of publication:
**30.09.2026 Bulletin 2026/40**

(21) Application number: **24915066.5**

(22) Date of filing: **06.12.2024**

(51) International Patent Classification (IPC):
***H04N 9/31*** *(2006.01)* ***H04N 13/106*** *(2018.01)*
***G06V 10/82*** *(2022.01)*

(52) Cooperative Patent Classification (CPC):
**G06V 10/82; H04N 9/31; H04N 9/3179; H04N 9/3194**

(86) International application number:
**PCT/CN2024/137334**

(87) International publication number:
**WO 2025/145850 (10.07.2025 Gazette 2025/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.01.2024 CN 202410022599**



(71) Applicant: **XGIMI Tech Co., Ltd.**
**Chengdu, Sichuan 610000 (CN)**

(72) Inventors:
- **BIAN, Haidong**
**Chengdu, Sichuan 610041 (CN)**
- **YU, Jinqing**
**Chengdu, Sichuan 610041 (CN)**
- **RAN, Peng**
**Chengdu, Sichuan 610041 (CN)**

(74) Representative: **ZBM Patents - Zea, Barlocci & Markvardsen**
**Rambla de Catalunya, 123**
**08008 Barcelona (ES)**


(54) **OBSTACLE RECOGNITION METHOD, PROJECTION METHOD AND PROJECTION APPARATUS**


(57) Disclosed in the present invention are an obstacle recognition method, a projection method and a projection apparatus. The method comprises: first, collecting environmental information by means of an image sensor at a target projection position; constructing three-dimensional spatial data of a current projection environment on the basis of the environmental information, and extracting depth obstacle feature points on the basis of the three-dimensional spatial data; constructing an infrared segmentation map of a projection plane on the basis of the environmental information, and extracting infrared obstacle feature points on the basis of the infrared segmentation map; and filtering the depth obstacle feature points and the infrared obstacle feature points, and labeling as target obstacle points the depth obstacle feature points and the infrared obstacle feature points which satisfy conditions. The present invention takes the depth data and the infrared data into account to achieve a seamless obstacle avoidance projection effect based on depth obstacle avoidance features and infrared obstacle avoidance features.


Environmental information is collected at a target projection position through an image sensor;

↓

Three-dimensional spatial data of a current projection environment is constructed based on the environmental information, and depth obstacle feature points are extracted based on the three-dimensional spatial data;

↓

An infrared segmentation map of a projection plane is constructed based on the environmental information, and infrared obstacle feature points are extracted based on the infrared segmentation map;

↓

The depth obstacle feature points and the infrared obstacle feature points are filtered, and the depth obstacle feature points and the infrared obstacle feature points that satisfy a condition are marked as target obstacle points.

**FIG. 1**

EP 4 815 437 A1

## Description

TECHNICAL FIELD

The present invention relates to the technical field of projection obstacle avoidance, and more particularly to an obstacle recognition method, a projection method and a projection device.

BACKGROUND

Due to characteristics of usage scenarios, a projector is often moved during use. After the entire projector is moved, an image projected on a screen or wall becomes distorted. Furthermore, obstacles (such as paintings, ornaments and switches) often exist between a projection plane and a viewing plane, affecting the viewing experience.

Obstacle recognition is generally performed through manual visual observation, which requires a detailed inspection of the projection plane such as the screen before setting up the projector. Although obvious obstacles can be recognized, in some projection environments with special conditions, uneven projection planes cannot be accurately recognized by naked eyes, leading to obstacles affecting the projection effect.

At present, a common practice is to use a projection user interface (UI) image function to implement obstacle avoidance calculation for the projection image. The projector needs to project a feature image onto the screen, capture the projected image through a built-in camera, and calculate a drop point space through an image processing algorithm. This method interrupts normal use of a user after projecting the feature image. Furthermore, a processing time is relatively long, usually taking several seconds to complete, which results in a pool user experience.

SUMMARY

In view of this, the present invention provides an obstacle recognition method, a projection method, and a projection device, which combine depth data and infrared data to achieve more effective obstacle recognition based on depth obstacle avoidance features and infrared obstacle avoidance features.

To solve the above technical problem, the present invention provides an obstacle recognition method, which includes the following operations.

Environmental information is collected at a target projection position through an image sensor.

Three-dimensional spatial data of a current projection environment is constructed based on the environmental information, and depth obstacle feature points are extracted based on the three-dimensional spatial data.

An infrared segmentation map of a projection plane is constructed based on the environmental information, and infrared obstacle feature points are extracted based on the infrared segmentation map.

The depth obstacle feature points and the infrared obstacle feature points are filtered, and the depth obstacle feature points and the infrared obstacle feature points meeting a condition are marked as target obstacle points.

As an optional implementation, the collecting environmental information at a target projection position through an image sensor includes the following operations.

Depth data of the current projection environment is collected through a depth sensor, and infrared data of the current projection environment is collected through an infrared sensor.

The constructing three-dimensional spatial data of a current projection environment based on the environmental information, and extracting depth obstacle feature points based on the three-dimensional spatial data includes the following operations.

Three-dimensional point cloud data is obtained from the depth data, the projection plane is fitted through a least squares method to obtain a plane equation, and a distance from each point to the projection plane is calculated; pixel points, having distances to the projection plane greater than a preset threshold, are marked as the depth obstacle feature points.

The constructing an infrared segmentation map of a projection plane based on the environmental information, and extracting infrared obstacle feature points based on the infrared segmentation map includes the following operations.

The infrared data is input into a trained infrared wall segmentation network to obtain the infrared segmentation map, and obstacles in a projection background are marked as the infrared obstacle feature points.

As an optional implementation, the filtering the depth obstacle feature points and the infrared obstacle feature points and marking the depth obstacle feature points and the infrared obstacle feature points that meet a condition as target obstacle points includes the following operations.

Feature points belonging to both the depth obstacle feature points and the infrared obstacle feature points are marked, and all marked feature points are treated as the target obstacle points.

Area filtering is performed on unmarked depth obstacle feature points; points having an area less than or equal to a first preset area are removed according to a filtering result; and remaining points are treated as the target obstacle points.

Area filtering is performed on unmarked infrared obstacle feature points; points having an area less than or equal to a second preset area are removed according to a filtering result; a region of interest around remaining infrared obstacle feature points is established, an average infrared intensity value of the region of interest is compared with an average pixel intensity value of the projection plane, and the infrared obstacle feature points meeting a preset condition are marked as the target obstacle points according to a comparison result.

As an optional implementation, the performing area filtering on unmarked infrared obstacle feature points and removing points having an area that is less than or equal to a second preset area according to a filtering result includes the following operations.

A respective connected region being marked only as the infrared obstacle feature points is found from an image; an area of each infrared obstacle connected region is calculated; and the infrared obstacle feature points in the respective connected region, the area of which is less than or equal to a second preset threshold, are removed.

The performing area filtering on unmarked depth obstacle feature points and removing points having an area less than or equal to a first preset area according to a filtering result includes the following operations.

A respective connected region being marked only as the depth obstacle feature points is found from the image; an area of each depth obstacle connected region is calculated; and the depth obstacle feature points in the respective connected region, the area of which is less than or equal to a first preset threshold, are removed.

As an optional implementation, the establishing a region of interest around remaining infrared obstacle feature points, comparing an average infrared intensity value of the region of interest with an average pixel intensity value of the projection plane, and marking the infrared obstacle feature points that meet a preset condition as the target obstacle points according to a comparison result, includes the following operations.

The region of interest adjacent to a connected region of the remaining infrared obstacle feature points is established; the average infrared intensity value of the region of interest is calculated; the average infrared intensity value is compared with the average pixel intensity value in the connected region; the infrared obstacle feature points are removed when a compared value meets a preset range and the removed infrared obstacle feature points are considered as a projection background; and the infrared obstacle feature points not meeting the preset range are treated as the target obstacle points.

In another aspect, the present invention further provides a projection method, which performs obstacle recognition using the obstacle recognition method as described above.

Projection is performed based on an obstacle recognition result, so as to avoid a recognized obstacle.

As an optional implementation, the performing projection based on an obstacle recognition result, so as to avoid a recognized obstacle includes the following operations.

An obstacle feature map in an image sensor coordinate system is obtained based on the obstacle recognition result.

The obstacle feature map is mapped to a projection coordinate system based on a homography mapping relationship between the infrared segmentation map and a projection image, to obtain an obstacle avoidance mask in the projection coordinate system.

A final projection drop point value is searched for based on the obstacle avoidance mask result and according to a preset projection ratio, so as to perform projection.

As an optional implementation, a method for calculating the homography mapping relationship includes the following operations.

A preset number of points in a plane is selected and the preset number of points is converted into a three-dimensional point set; the three-dimensional point set is converted into three-dimensional points in the projection coordinate system in combination with calibration information of a projection device; and the three-dimensional points in the projection coordinate system are mapped back to the projection image, to obtain respective two-dimensional projection coordinates.

A homography matrix is calculated based on the two-dimensional projection coordinates, through two-dimensional points in an infrared sensor and respective two-dimensional points in the projection image.

In another aspect, the present invention further provides a projection device, which includes a projection module, a sensing module, an image recognition module, and a screening module.

The projection module is provided with a lens, and is configured to receive electrical signals and convert the electrical signals into optical signals for projection.

The sensing module includes an inertial sensor, a depth sensor and/or an infrared sensor, and is configured to collect environmental information at a target projection position.

The image recognition module is configured to: perform image recognition according to the feedback of the sensing module; construct three-dimensional spatial data of a current projection environment based on the environmental information and extract depth obstacle feature points based on the three-dimensional spatial data; and construct an infrared segmentation map of the projection plane based on the environmental information and extract infrared obstacle feature points based on the infrared segmentation map.

The screening module is configured to filter the depth obstacle feature points and the infrared obstacle feature points, and mark the depth obstacle feature points and the infrared obstacle feature points that meet a condition as target obstacle points.

The screening module configured to filter the depth obstacle feature points and the infrared obstacle feature point, includes that: the screening module is configured to:

mark feature points belonging to both the depth obstacle feature points and the infrared obstacle feature points, and treat all marked feature points as the target obstacle points;
perform area filtering on unmarked depth obstacle feature points, remove points having an area less than or equal to a first preset area according to a filtering result, and treat remaining points as the target obstacle points; and
perform area filtering on unmarked infrared obstacle feature points, remove points having an area that is less than or equal to a second preset area according to a filtering result, establish a region of interest around remaining infrared obstacle feature points, compare an average infrared intensity value of the region of interest with an average pixel intensity value of the projection plane, and mark the infrared obstacle feature points that meet a preset condition as the target obstacle points according to a comparison result.

The beneficial effects of the present invention are as follows.

The present invention performs joint filtering on the depth obstacle feature points and the infrared obstacle feature points through feature extraction in an infrared dimension and feature extraction in a depth dimension, which can more effectively recognize obstacles and automatically achieve an effect of seamless obstacle avoidance. This eliminates the need to interrupt a user by projecting a preset image for obstacle avoidance calculation, thus improving the user experience.

## BRIEF DESCRIPTION OF THE DRAWINGS

FIG. 1 is a schematic flowchart illustrating an obstacle recognition method according to an embodiment of the present invention.
FIG. 2 is a schematic diagram illustrating drop points of obstacle avoidance projection after mapping a segmentation result according to an embodiment of the present invention.

## DETAILED DESCRIPTION

In order to enable those skilled in the art to better understand the technical solution of the present invention, the present invention will be described in further detail below in combination with specific implementations.

### Embodiment

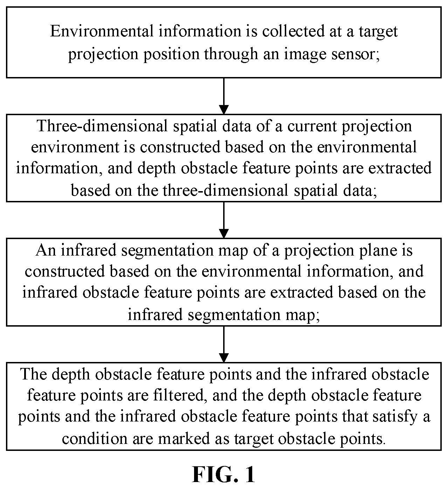

Please refer to FIG. 1, an embodiment provides an obstacle recognition method, which includes the following operations.

Environmental information is collected at a target projection position through an image sensor; three-dimensional spatial data of a current projection environment is constructed based on the environmental information, and depth obstacle feature points are extracted based on the three-dimensional spatial data; an infrared segmentation map of a projection plane is constructed based on the environmental information, and infrared obstacle feature points are extracted based on the infrared segmentation map; and the depth obstacle feature points and the infrared obstacle feature points are filtered, and the depth obstacle feature points and the infrared obstacle feature points meeting a condition are marked as target obstacle points. Specifically, collection may be performed after determining that a collection precondition is met based on a built-in inertial measurement unit (e.g., an inertial sensor), or the collection is triggered by a user. In an optional implementation, when a projector (a model and type of which are not limited in the present embodiment) is moved to a viewing position, a stationary state of the projector is determined based on the data of the built-in inertial measurement unit (IMU). The projector starts collecting the required data in response to determining the projector is in the stationary state or in response to triggering a function via an interface button.

The above collection of the environmental information at the target projection position through the image sensor is implemented in the present embodiment by collecting depth data of the current projection environment through a depth sensor, then constructing the three-dimensional spatial data of the current projection environment based on the environmental information, and extracting the depth obstacle feature points based on the three-dimensional spatial data, which specifically includes the following operations. The depth data of the current projection environment is collected

through the depth sensor, acceleration and angular velocity data of a current device is collected through an inertial measurement unit. Then, a plane equation of the projection plane is first fitted using the depth data. The plane can be represented by the equation $Ax + By + Cz + D = 0$. Then, three-dimensional point cloud data is obtained from the depth data, where coordinates of each point are $(x, y, z)$, and the plane is fitted using a least squares method to minimize a sum of distances from all points to the plane. Parameters $A$, $B$, $C$ and $D$ of the plane equation is obtained through fitting, then the fitted plane equation is derived, where $A$, $B$ and $C$ are normal vectors of the plane, and $D$ is an offset of the plane.

The distance *d_pt* from each point to the plane is calculated as follows.

$$[d_pt = \frac{|Ax+By+Cz+D|}{\sqrt{A^2+B^2+C^2}}]$$

A pixel point, a distance *d_pt* of which is greater than a preset threshold, is marked as the depth obstacle feature point. The preset threshold can be selected within 30-70*mm*, such as 30*mm*, 50*mm*, 60*mm*, or 70*mm*, etc. A flatness weight of the projection plane may be determined according to an actual projection environment and angle, for example, a projection effect is affected by wall protrusions or a screen being pushed forward from behind.

A process for obtaining the infrared obstacle feature points includes the following operations. Firstly, infrared data of the current projection environment is collected through an infrared sensor, the infrared data is input into a trained infrared wall segmentation network to obtain the infrared segmentation map, obstacles in a projection background are marked to construct the infrared segmentation map of the current projection environment, and the obstacles in the projection background are marked as the infrared obstacle feature points.

In order to achieve the above objective, an infrared wall segmentation network is first trained using a pre-designed deep learning network structure and collected infrared background annotation data. During use, the infrared data is input into the segmentation network, and the infrared segmentation map at a current moment is output. Then, the obstacles in the projection background are marked as the infrared obstacle feature points in an infrared feature dimension.

After the infrared obstacle feature points and the depth obstacle feature points are obtained, the infrared obstacle feature points and the depth obstacle feature points cannot be used directly to prevent errors or misrecognitions. A joint depth-infrared re-determination may be performed on the infrared obstacle feature points and the depth obstacle feature points to improve accuracy and comprehensiveness of recognition of obstacle points.

Implemented in the present embodiment, feature points belonging to both the depth obstacle feature points and the infrared obstacle feature points are first marked, and all marked feature points are treated as the target obstacle points. This step only completes a first removal of obstacle points having overlapping features, and has not yet performed removal of specific obstacle points in combination with their feature attribute information. Therefore, for the remaining infrared obstacle feature attribute points or depth obstacle feature attribute points, the present embodiment implements a small-area filtering across both an infrared dimension and a depth dimension, so as to complete a second removal.

Subsequently, area filtering is performed on unmarked infrared obstacle feature points and unmarked depth obstacle feature points, and the points having an area less than or equal to the preset area are removed according to a filtering result, so as to reduce errors and increase the fault tolerance effect of obstacle avoidance recognition.

As an optional implementation, area filtering is performed on unmarked depth obstacle feature points; and points having an area less than or equal to a first preset area are removed according to a filtering result. The first preset area may be 2-10$mm^2$, such as 2$mm^2$, 5$mm^2$, 8$mm^2$, or 10$mm^2$, etc. This is because different scenarios may indeed involve situations where a projection plane is not smooth; however, considering the projection requirements and the projection range of the projector, a small number of depth obstacle feature points with low severity can be ignored.

Area filtering is performed on unmarked infrared obstacle feature points; and points having an area that is less than or equal to a second preset area are removed according to a filtering result. The second preset area may be 20-60$mm^2$, such as 20$mm^2$, 30$mm^2$, 50$mm^2$, or 60$mm^2$. This is because different scenarios may indeed involve situations where noise points appear on the projection plane. Since the projector generally has high light intensity, a small number of infrared obstacle feature points with small areas can be ignored.

A region of interest around remaining infrared obstacle feature points is established; an average infrared intensity value of the region of interest is compared with an average pixel intensity value of the projection plane; and the infrared obstacle feature points, that meet a preset condition, are marked as the target obstacle points according to a comparison result. Specifically, the average infrared intensity value *I_ROI* is calculated within the region of interest adjacent to the connected region (e.g., the region of interest with a size of 15∗15, a size of 10∗10, or a size of 20∗20, etc., which can be determined according to an actual projection size and proportion), and then the average infrared intensity value is compared with pixels in the infrared connected region. If a compared value meets a preset range, the infrared obstacle feature points are removed and the removed infrared obstacle feature points are considered as a projection background. Specifically:

$$Abs(I_(\text{infrared obstacle}) - I_ROI) < th_ir$$

where *Abs* represents an operation of taking an absolute value, *th_ir* represents an infrared intensity threshold close to a preset value. The infrared obstacle feature points that meet the above formula are removed and the removed infrared obstacle feature points are considered as the projection background, thereby completing a third removal.

It should be understood that in some other embodiments, only one or two of the above filtering methods may be used to filter the obstacle feature points. For example, only the feature points, that are both the depth obstacle feature points and the infrared obstacle feature points, may be used as the target obstacle points; or only area filtering may be performed, or the like. Based on the above three filtering steps, misrecognition of non-obstacle points can be eliminated to the greatest extent.

In another aspect, an embodiment further provides a projection method, which performs obstacle recognition using the obstacle recognition method as described above, and then performs projection based on an obstacle recognition result, so as to avoid a recognized obstacle. In this way, there is no need to separately perform image obstacle avoidance, thereby achieving an effect of seamless obstacle avoidance.

Specifically, in the present embodiment, the performing projection based on an obstacle recognition result, so as to avoid a recognized obstacle includes the following operations.

An obstacle feature map in an image sensor coordinate system is obtained based on the obstacle recognition result.

The obstacle feature map is mapped to a projection coordinate system based on a homography mapping relationship between the infrared segmentation map and a projection image, to obtain an obstacle avoidance mask in the projection coordinate system.

A final projection drop point value is searched for based on the obstacle avoidance mask result and according to a preset projection ratio, so as to perform projection.

Optionally, the homography mapping relationship between the infrared segmentation map and the projection image may be obtained through a constructed homography matrix from a projection device to the projection plane, so as to obtain a subsequent required segmentation image mapping. Then, the obstacle avoidance mask in the projection coordinate system is obtained through calculation between the obstacle feature map on the projection plane and the projection coordinate system of the homography mapping relationship, the obstacle avoidance mask in the projection coordinate system is obtained. Subsequently, based on the obstacle avoidance mask result, the final projection drop point value is found according to the preset projection ratio for display.

In the present embodiment, the following method for calculating the homography mapping relationship is used.

N points in a plane is selected and N points are converted into a three-dimensional point set P.

$$P_i = Z_i \cdot K_t^{-1} \cdot [u_i, v_i, 1]^T$$

where,

$$\mathrm{i} \subseteq [0, N),$$

which is an index of the selected points in the projection plane; $K_t$ is an internal parameter of an infrared sensor, which is obtained through prior calibration; $[u_i, v_i]$ are a horizontal coordinate and a vertical coordinate of a plane point in an infrared coordinate system; and $Z_i$ is a depth value of the point.

In combination with calibration information of a device, the corresponding points are then converted into three-dimensional points in the projection coordinate system in combination with external parameters obtained from the calibration.

$$P_i^{pro} = R_{pt} * P_i + T_{pt}$$

where,

$$i \subseteq [0, N);$$

$R_{pt}$ and $T_{pt}$ are respectively represent a rotation matrix and a translation vector from the infrared sensor to the projection;

$P_i^{pro}$ is a three-dimensional point with an index i in the projection coordinate system.

Then the three-dimensional points in the projection coordinate system is mapped back to the projection image, to obtain two-dimensional projection coordinates corresponding to the three-dimensional points.

$$\left[u_i^{pro}, v_i^{pro}\right] = 1/Z^{pro} * K_p * P_i^{pro}$$

where, $K_p$ is an internal parameter of the projection, which is obtained through calibration; $Z^{pro}$ is a depth value of the converted point, which is used for normalization; $\left[u_i^{pro}, v_i^{pro}\right]$ is two-dimensional projection coordinates corresponding to a point with an index *i*.

Then a homography matrix is calculated through two-dimensional points in an infrared sensor and two-dimensional points in the projection image corresponding to the two-dimensional points in the infrared sensor. The calculation is performed by using a least squares method, and a calculation formula thereof is:

$$\begin{pmatrix} u_i^{pro} \\ v_i^{pro} \\ 1 \end{pmatrix} \propto \begin{pmatrix} H_{11} & H_{12} & H_{13} \\ H_{21} & H_{22} & H_{23} \\ H_{31} & H_{32} & 1 \end{pmatrix} * \begin{pmatrix} u_i \\ v_i \\ 1 \end{pmatrix}$$

where, $H$ is a 3*3 homography matrix.

The homography matrix $H$ is the homography mapping relationship between the infrared segmentation image and the projection image, which maps the obstacle avoidance segmentation result to the coordinate system of the projection image, and then the obstacle avoidance mask $I_p(res)$ is obtained.

$$I_p(res) = H * I_t$$

where, $I_t$ represents the obstacle feature map obtained after the re-determination and filtering steps, is a pixel representation in a depth-infrared coordinate system, and needs to be mapped to the projection coordinate system through the homography relationship to obtain a final obstacle avoidance mask $I_p(res)$ in the projection coordinate system.

Finally, according to a set ratio, commonly such as a 16:9 or 4:3 aspect ratio, final projection drop point values are calculated based on the obstacle avoidance mask $I_p(res)$, to search for an optimal projection region, and display a final image, thereby completing the seamless projection.

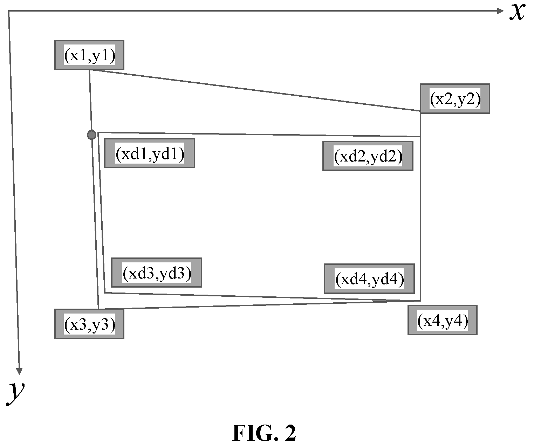

In this way, the present embodiment provides depth obstacle avoidance features and infrared obstacle avoidance features in combination with sensors such as the depth sensor, the infrared sensor and the IMU, and performs re-determination and filtering in combination with various data, thereby implementing the projection solution in which a final effect of seamless obstacle avoidance is achieved (as illustrated in FIG. 2).

In addition, an embodiment also provides a projection device for seamless obstacle avoidance, which includes a projection module, a sensing module, an image recognition module, and a screening module.

The projection module is provided with a lens, and is configured to receive electrical signals and convert the electrical signals into optical signals for projection.

The sensing module includes an inertial sensor, a depth sensor and/or an infrared sensor, and is configured to collect environmental information at a target projection position.

The image recognition module is configured to: perform image recognition according to feedback of the sensing module; construct three-dimensional spatial data of a current projection environment based on the environmental information and extract depth obstacle feature points based on the three-dimensional spatial data; and construct an infrared segmentation map of the projection plane based on the environmental information and extract infrared obstacle feature points based on the infrared segmentation map.

The screening module is configured to filter the depth obstacle feature points and the infrared obstacle feature points, and mark the depth obstacle feature points and the infrared obstacle feature points that meet a condition as target obstacle points.

As an optional implementation, the screening module configured to filter the depth obstacle feature points and the infrared obstacle feature point, includes that: the screening module is configured to:

mark feature points belonging to both the depth obstacle feature points and the infrared obstacle feature points, and treat all marked feature points as the target obstacle points;

perform area filtering on unmarked depth obstacle feature points, remove points having an area less than or equal to a first preset area according to a filtering result, and treat remaining points as the target obstacle points; and perform area filtering on unmarked infrared obstacle feature points, remove points having an area that is less than or equal to a second preset area according to a filtering result, establish a region of interest around remaining infrared obstacle feature points, compare an average infrared intensity value of the region of interest with an average pixel intensity value of the projection plane, and mark the infrared obstacle feature points that meet a preset condition as the target obstacle points according to a comparison result.

The above are only the preferred embodiments of the present invention. It should be pointed out that the above preferred embodiments should not be construed as limiting the present invention. The protection scope of the present invention should be subject to the scope defined by the claims. For those of ordinary skill in the art, several improvements and modifications can be made without departing from the spirit and scope of the present invention, and these improvements and modifications should also be considered as the protection scope of the present invention.

## Claims

**1.** An obstacle recognition method, comprising:

collecting environmental information at a target projection position through an image sensor;
constructing three-dimensional spatial data of a current projection environment based on the environmental information, and extracting depth obstacle feature points based on the three-dimensional spatial data;
constructing an infrared segmentation map of a projection plane based on the environmental information, and extracting infrared obstacle feature points based on the infrared segmentation map; and
filtering the depth obstacle feature points and the infrared obstacle feature points, and marking the depth obstacle feature points and the infrared obstacle feature points that meet a condition as target obstacle points.

**2.** The obstacle recognition method of claim 1, wherein the collecting environmental information at a target projection position through an image sensor comprises:

collecting depth data of the current projection environment through a depth sensor, and collecting infrared data of the current projection environment through an infrared sensor;
wherein the constructing three-dimensional spatial data of a current projection environment based on the environmental information, and extracting depth obstacle feature points based on the three-dimensional spatial data, comprises:

obtaining three-dimensional point cloud data from the depth data, fitting the projection plane through a least squares method to obtain a plane equation, and calculating a distance from each point to the projection plane; and marking pixel points, having distances to the projection plane greater than a preset threshold, as the depth obstacle feature points;
wherein the constructing an infrared segmentation map of a projection plane based on the environmental information, and extracting infrared obstacle feature points based on the infrared segmentation map, comprises:
inputting the infrared data into a trained infrared wall segmentation network to obtain the infrared segmentation map, and marking obstacles in a projection background as the infrared obstacle feature points.

**3.** The obstacle recognition method of claim 1, wherein the filtering the depth obstacle feature points and the infrared obstacle feature points, and marking the depth obstacle feature points and the infrared obstacle feature points that meet a condition as target obstacle points, comprises:

marking feature points belonging to both the depth obstacle feature points and the infrared obstacle feature points, and treating all marked feature points as the target obstacle points;
performing area filtering on unmarked depth obstacle feature points, removing points having an area less than or equal to a first preset area according to a filtering result, and treating remaining points as the target obstacle points; and
performing area filtering on unmarked infrared obstacle feature points, removing points having an area less than or equal to a second preset area according to a filtering result, establishing a region of interest around remaining infrared obstacle feature points, comparing an average infrared intensity value of the region of interest with an

average pixel intensity value of the projection plane, and marking the infrared obstacle feature points that meet a preset condition as the target obstacle points according to a comparison result.

4. The obstacle recognition method of claim 3, wherein the performing area filtering on unmarked infrared obstacle feature points and removing points having an area less than or equal to a second preset area according to a filtering result, comprises:

   finding, from an image, a respective connected region being marked only as the infrared obstacle feature points; calculating an area of each infrared obstacle connected region; and removing the infrared obstacle feature points in the respective connected region, the area of which is less than or equal to a second preset threshold;
   wherein the performing area filtering on unmarked depth obstacle feature points, and removing points having an area less than or equal to a first preset area according to a filtering result, comprises:
   finding, from the image, a respective connected region being marked only as the depth obstacle feature points; calculating an area of each depth obstacle connected region; and removing the depth obstacle feature points in the respective connected region, the area of which is less than or equal to a first preset threshold.

5. The obstacle recognition method of claim 3, wherein the establishing a region of interest around remaining infrared obstacle feature points, comparing an average infrared intensity value of the region of interest with an average pixel intensity value of the projection plane, and marking the infrared obstacle feature points that meet a preset condition as the target obstacle points according to a comparison result, comprises:

   establishing the region of interest adjacent to a connected region of the remaining infrared obstacle feature points;
   calculating the average infrared intensity value of the region of interest;
   comparing the average infrared intensity value with the average pixel intensity value in the connected region;
   removing the infrared obstacle feature points when a compared value meets a preset range, and considering the removed infrared obstacle feature points as a projection background; and
   treating the infrared obstacle feature points not meeting the preset range as the target obstacle points.

6. A projection method, comprising:

   performing obstacle recognition using the obstacle recognition method of any one of claims 1 to 5; and
   performing projection based on an obstacle recognition result, so as to avoid a recognized obstacle.

7. The projection method of claim 6, wherein the performing projection based on an obstacle recognition result, so as to avoid a recognized obstacle, comprises:

   obtaining an obstacle feature map in an image sensor coordinate system based on the obstacle recognition result;
   mapping the obstacle feature map to a projection coordinate system based on a homography mapping relationship between the infrared segmentation map and a projection image, to obtain an obstacle avoidance mask in the projection coordinate system; and
   searching, based on the obstacle avoidance mask result, for a final projection drop point value according to a preset projection ratio, so as to perform projection.

8. The projection method of claim 7, wherein a method for calculating the homography mapping relationship comprises:

   selecting a preset number of points in a plane and converting the preset number of points into a three-dimensional point set; converting the three-dimensional point set into three-dimensional points in the projection coordinate system in combination with calibration information of a projection device; and mapping the three-dimensional points in the projection coordinate system back to the projection image, to obtain respective two-dimensional projection coordinates;
   calculating, based on the two-dimensional projection coordinates, a homography matrix through two-dimensional points in an infrared sensor and respective two-dimensional points in the projection image.

9. A projection device, comprising:

   a projection module, wherein the projection module is provided with a lens, and is configured to receive electrical signals and convert the electrical signals into optical signals for projection;

a sensing module, wherein the sensing module comprises a depth sensor and/or an infrared sensor, and is configured to collect environmental information at a target projection position;
an image recognition module, wherein the image recognition module is configured to: perform image recognition according to feedback of the sensing module; construct three-dimensional spatial data of a current projection environment based on the environmental information and extract depth obstacle feature points based on the three-dimensional spatial data; and construct an infrared segmentation map of the projection plane based on the environmental information and extract infrared obstacle feature points based on the infrared segmentation map; and
a screening module, wherein the screening module is configured to filter the depth obstacle feature points and the infrared obstacle feature points, and mark the depth obstacle feature points and the infrared obstacle feature points that meet a condition as target obstacle points.

**10.** The projection device of claim 9, wherein the sensing module further comprises an inertial measurement unit, and the projection device is configured to start collecting required data after the inertial measurement unit determines that a collection precondition is met.

**11.** The projection device of claim 10, wherein the inertial measurement unit is an inertial sensor.

**12.** The projection device of any one of claims 9 to 11, wherein the screening module configured to filter the depth obstacle feature points and the infrared obstacle feature point, comprises that: the screening module is configured to:

mark feature points belonging to both the depth obstacle feature points and the infrared obstacle feature points, and treat all marked feature points as the target obstacle points;
perform area filtering on unmarked depth obstacle feature points, remove points having an area less than or equal to a first preset area according to a filtering result, and treat remaining points as the target obstacle points; and
perform area filtering on unmarked infrared obstacle feature points, remove points having an area less than or equal to a second preset area according to a filtering result, establish a region of interest around remaining infrared obstacle feature points, compare an average infrared intensity value of the region of interest with an average pixel intensity value of the projection plane, and mark the infrared obstacle feature points that meet a preset condition as the target obstacle points according to a comparison result.

Environmental information is collected at a target projection position through an image sensor;

Three-dimensional spatial data of a current projection environment is constructed based on the environmental information, and depth obstacle feature points are extracted based on the three-dimensional spatial data;

An infrared segmentation map of a projection plane is constructed based on the environmental information, and infrared obstacle feature points are extracted based on the infrared segmentation map;

The depth obstacle feature points and the infrared obstacle feature points are filtered, and the depth obstacle feature points and the infrared obstacle feature points that satisfy a condition are marked as target obstacle points.

**FIG. 1**

x
y
(x1,y1)
(x2,y2)
(xd1,yd1)
(xd2,yd2)
(xd3,yd3)
(xd4,yd4)
(x3,y3)
(x4,y4)

**FIG. 2**

## INTERNATIONAL SEARCH REPORT

International application No. **PCT/CN2024/137334**

**A. CLASSIFICATION OF SUBJECT MATTER**

H04N9/31(2006.01)i；H04N13/106(2018.01)i

According to International Patent Classification (IPC) or to both national classification and IPC

**B. FIELDS SEARCHED**

Minimum documentation searched (classification system followed by classification symbols)

IPC：H04N

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; JPTXT; CNKI; IEEE: 障碍, 异物, 阻碍, 阻挡, 避障, 检测, 识别, 判别, 辨识, 侦测, 避让, 避开, 深度, 进深, 视差, 景深, 红外, obstacle, barrier, detect, recognize, recognition, discriminate, identification, identify, avoid, infrared, IR, depth, project

**C. DOCUMENTS CONSIDERED TO BE RELEVANT**

| Category* | Citation of document, with indication, where appropriate, of the relevant passages | Relevant to claim No. |
|---|---|---|
| PX | CN 117834828 A (YIBIN XGIMI OPTOELECTRONIC CO., LTD.) 05 April 2024 (2024-04-05) description, paragraphs [0051]-[0100], and figures 1-2 | 1-12 |
| X | CN 108898055 A (CHANG'AN UNIVERSITY) 27 November 2018 (2018-11-27) description, paragraphs [0006]-[0059], and figures 1-3 | 1-2 |
| X | CN 106650708 A (NANJING UNIVERSITY OF AERONAUTICS AND ASTRONAUTICS) 10 May 2017 (2017-05-10) description, paragraphs [0010]-[0055], and figures 1-2 | 1-2 |
| Y | CN 108898055 A (CHANG'AN UNIVERSITY) 27 November 2018 (2018-11-27) description, paragraphs [0006]-[0059], and figures 1-3 | 6-11 |
| Y | CN 106650708 A (NANJING UNIVERSITY OF AERONAUTICS AND ASTRONAUTICS) 10 May 2017 (2017-05-10) description, paragraphs [0010]-[0055], and figures 1-2 | 6-11 |

☑ Further documents are listed in the continuation of Box C. ☑ See patent family annex.

* Special categories of cited documents:

- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 March 2025** | **13 March 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No. **PCT/CN2024/137334**

**C. DOCUMENTS CONSIDERED TO BE RELEVANT**

| Category* | Citation of document, with indication, where appropriate, of the relevant passages | Relevant to claim No. |
|---|---|---|
| Y | CN 113840126 A (IVIEW DISPLAYS (SHENZHEN) CO., LTD.) 24 December 2021 (2021-12-24) description, paragraphs [0025]-[0064], and figures 1-7 | 6-11 |
| A | CN 114612786 A (HANGZHOU EZVIZ SOFTWARE CO., LTD.) 10 June 2022 (2022-06-10) entire document | 1-12 |
| A | JP 2017009829 A (RICOH CO., LTD.) 12 January 2017 (2017-01-12) entire document | 1-12 |

Form PCT/ISA/210 (second sheet) (July 2022)

**INTERNATIONAL SEARCH REPORT**
**Information on patent family members**

International application No.
**PCT/CN2024/137334**

| Patent document cited in search report | Publication date (day/month/year) | Patent family member(s) | Publication date (day/month/year) |
|---|---|---|---|
| CN 117834828 A | 05 April 2024 | None | |
| CN 108898055 A | 27 November 2018 | None | |
| CN 106650708 A | 10 May 2017 | CN 106650708 B | 11 August 2023 |
| CN 113840126 A | 24 December 2021 | WO 2023040081 A1 | 23 March 2023 |
| CN 114612786 A | 10 June 2022 | WO 2023173950 A1 | 21 September 2023 |
| | | EP 4495896 A1 | 22 January 2025 |
| JP 2017009829 A | 12 January 2017 | None | |

Form PCT/ISA/210 (patent family annex) (July 2022)